# FASCICULE DE BREVET EUROPEEN

(11) **EP 1 791 242 B1**
(45) Date de publication et mention de la délivrance du brevet: **28.05.2008**
(21) Numéro de dépôt: 05405673.4
(22) Date de dépôt: 28.11.2005
(51) Int. Cl.: H02K 7/06, H02K 5/173, F16C 19/16

(54) **Actionneur linéaire**
Linearantrieb
Linear actuator

(43) Date de publication de la demande: 30.05.2007
(73) Titulaire: Société Industrielle de Sonceboz S.A., 2605 Sonceboz (CH)
(72) Inventeur: Pfister, Jean-François, 2605 Sonceboz (CH)
(74) Mandataire: Reuteler, Raymond Werner

(56) Documents cités:
- GB-A- 812 646
- US-A- 3 428 378
- US-A- 3 767 985
- US-A- 4 362 344
- US-A- 4 993 851
- US-A- 5 138 209
- US-A1- 2003 117 037
- US-A1- 2004 146 232
- US-A1- 2005 046 291

## Description

La présente invention concerne un actionneur linéaire comprenant un organe entraîné en rotation par un moteur électrique pour le déplacement linéaire d'un organe à commander. L'organe peut en particulier être un écrou d'un système vis écrou pour le déplacement linéaire de l'organe à commander.

Des actionneurs linéaires sont très répandus et utilisés dans beaucoup d'applications différentes, des exemples étant décrits dans les demandes de brevet WO 01/89062 et EP 1 561 639. Les dispositifs décrits dans ces publications comportent un moteur pas à pas entraînant un système vis écrou pour le déplacement linéaire d'un arbre solidaire d'une vis. Le moteur pas à pas permet de déplacer et positionner l'arbre de la vis rapidement, avec peu de pièces mécaniques et en utilisant une commande relativement simple.

L'actionneur décrit dans EP 1 561 639 est destiné au réglage de la position horizontale ou verticale de phares automobiles. L'ajustement des phares nécessite un système vis écrou performant, fiable et dynamique. Dans le domaine automobile, comme dans beaucoup de domaines, on cherche également à utiliser des composants ayant un faible encombrement, poids et prix de revient. Les composants utilisés dans les automobiles doivent toutefois rester performants même dans des conditions environnementales extrêmes, en particulier pour des plages de température allant de -40° C à +120° C, et être résistants à la poussière, à l'eau et au sel.

US 2005/0046291 décrit un actionneur linéaire comprenant un système vis-écrou avec un vis à déplacement linéaire et un rotor à écrou supporté par deux paliers à billes.

US 4,993,851 décrit un rotor supporté par deux paliers à billes, avec des chemins de roulement usinés dans le rotor.

Dans les actionneurs conventionnels, le couple exercé par le rotor sur l'organe à déplacer diminue lorsque la température baisse, en raison de l'augmentation des forces de frottement dans les paliers disposés entre le rotor et le stator. Ceci est dû à l'augmentation de la viscosité des lubrifiants présents dans les paliers. Bien qu'il existe certains lubrifiants ayant une viscosité acceptable à très basse température, ceux-ci sont soit onéreux, soit inacceptables pour des raisons écologiques.

Au vu de ce qui précède, un but de l'invention est de réaliser un actionneur performant et fiable sur une large amplitude thermique.

Il est avantageux de réaliser un actionneur économe et compact, notamment pour des applications automobiles.

Il est en outre avantageux de réaliser un dispositif comportant peu de pièces afin de réduire les coûts d'assemblage et de fabrication.

Des buts de l'invention sont réalisés par un actionneur selon la revendication 1.

Dans la présente invention, un actionneur pour le déplacement linéaire d'un organe à commander comporte un boîtier, un moteur et un système vis écrou. Le moteur, qui est de préférence un moteur pas à pas, comprend un stator comportant des bobines et un rotor comportant des aimants permanents, le rotor étant supporté, à une de ses extrémités, par un palier sous forme de roulement à billes, comprenant un chemin de roulement fixé au boîtier, et un chemin de roulement à débit, solidaire du rotor.

Selon une forme d'exécution de l'invention le palier sous forme de roulement à billes comprend un chemin de roulement radialement extérieur fixé au boîtier, et un chemin de roulement radialement intérieur sous forme d'un axe plein solidaire et s'étendant du rotor. Alternativement, le roulement à billes peut comprendre un chemin de roulement à débit radialement extérieur solidaire et fixé au rotor, et un chemin de roulement radialement intérieur sous forme d'un axe plein fixé au boîtier.

Le chemin de roulement intérieur étant formé dans un axe plein disposé dans le prolongement de l'axe du rotor, il devient possible de réduire au minimum le diamètre de roulement des billes. On réduit ainsi au minimum le couple de résistance dû au frottement des billes sur les chemins de roulement puisque la vitesse tangentielle des billes est réduite et le point d'application de la force de frottement est très proche de l'axe de rotation.

Le corps central du rotor comporte, de préférence, une portion filetée engageant une partie de vis solidaire d'un organe à déplacement linéaire. Alternativement, le rotor peut comporter une partie de vis s'étendant du corps central et engageant une partie d'écrou solidaire d'un organe à déplacement linéaire.

Une protubérance, un rail, ou un autre moyen non axisymétrique complémentaire avec des moyens de guidage d'une partie de boîtier empêche l'organe à déplacement linéaire d'être mis en rotation.

Avantageusement, dans l'actionneur selon l'invention on peut se dispenser d'un deuxième palier, puisque l'extrémité du rotor opposée à l'extrémité supportée par un palier, sera supportée par la partie filetée de l'organe de déplacement linéaire.

D'autres buts et aspects avantageux de l'invention ressortiront des revendications et de la description, ainsi que du dessin annexé, dans lequel :
La figure 1 est une vue en coupe d'un actionneur linéaire selon une forme d'exécution de l'invention.
La figure 2 est une vue en coupe d'un actionneur linéaire selon une deuxième forme d'exécution de l'invention.

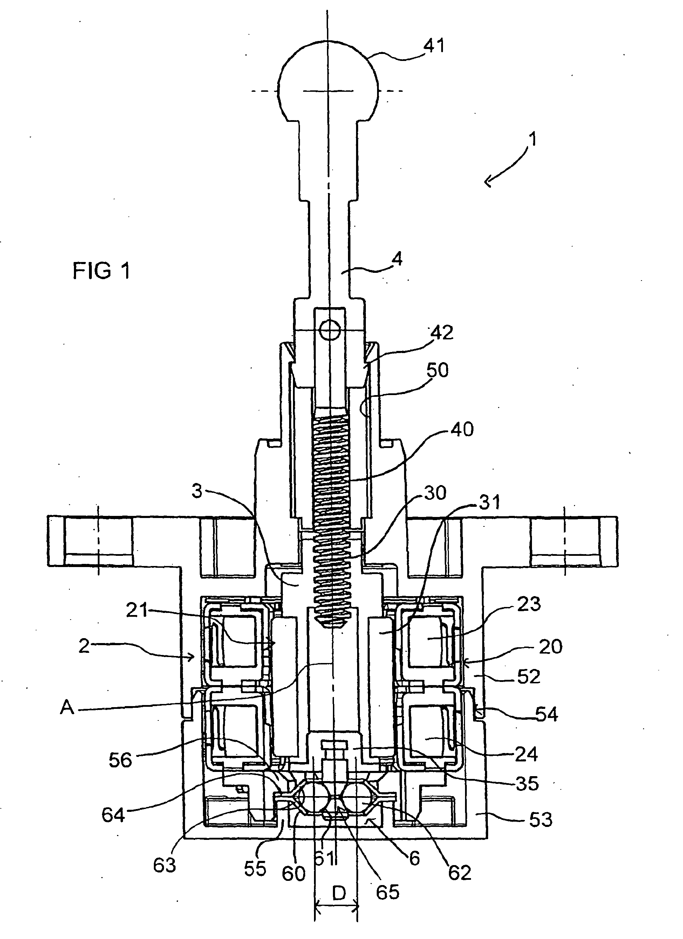

Faisant référence à la figure 1, un actionneur 1 selon une forme d'exécution préférée de l'invention, comprend un moteur 2, de préférence un moteur pas à pas, un stator 20 comprenant une ou plusieurs bobines 24, et un rotor 21 comprenant un corps central 3 et un ou plusieurs aimants permanents 31.

Le rotor 21 est fixé au corps central 3, percé sur une de ses extrémités par un filetage intérieur axial 30. Un organe à déplacement linéaire 4 comprend, à une de ses extrémités, une portion filetée 40 engagée dans le trou fileté axial 30 du corps central 3, formant un système vis écrou. Alternativement, le rotor peut comporter une partie de vis s'étendant du corps central et engageant une partie d'écrou solidaire d'un organe à déplacement linéaire (variante non illustrée).

L'organe à déplacement linéaire 4 comporte, à son extrémité libre opposée à la partie filetée 40, une partie d'accouplement 41 pour sa connexion à un organe à commander, tel que le support d'un phare automobile amovible.

L'organe à déplacement linéaire 4 comprend au moins une protubérance 42 ou d'autres moyens de guidage non axisymétriques engagés dans des moyens de guidage 50 aménagés dans une partie du boîtier 5 afin d'empêcher la rotation de l'organe à déplacement linéaire 4. On comprend donc que la mise en rotation du rotor 21, dans un sens ou dans l'autre, entraînant la rotation du corps central 3, impose un mouvement linéaire axial à l'organe de déplacement linéaire 4 par vissage, respectivement dévissage, de la portion filetée 40 dans le trou fileté 30, la mise en rotation dudit organe de déplacement linéaire 4 étant empêchée par les protubérances 42 dans les moyens de guidage 50.

L'utilisation d'un moteur pas à pas est avantageuse puisqu'elle permet de facilement et rapidement régler la position de l'organe à commander dans une construction compacte et peu coûteuse. D'autres types de moteurs réversibles peuvent néanmoins être utilisés dans la présente invention.

Le support et le guidage du corps central 3 sont assurés, du côté de son extrémité comprenant le trou fileté 30 par ledit trou fileté en appui sur la portion filetée 40, et du côté de son autre extrémité par un palier 6 comprenant un roulement à billes apte à supporter des charges axiales et radiales.

Dans la forme d'exécution de l'invention illustrée en figure 1, le palier 6 comporte un chemin de roulement radialement extérieur 60 fixé au boîtier, et un chemin de roulement radialement intérieur 61, les chemins de roulement ayant des surfaces de roulement inclinées par rapport à l'axe de rotation A, afin de guider les billes 62 radialement et supporter une charge dans la direction axiale.

Le chemin de roulement radialement extérieur 60 peut avantageusement être formé par une paire de tôles étampées identiques 63 ayant une portion annulaire 64 perpendiculaire à l'axe de rotation A, prise en sandwich entre des épaules de deux parties 55, 56 de boîtier assemblées.

Le chemin de roulement radialement intérieur 61 est formé par un axe plein 65, solidaire du corps central 3, coaxial à ce dernier et dans son prolongement. L'axe est de préférence réalisé à partir d'une barre en métal usiné, par exemple par tournage ou forgeage.

L'axe plein 65 peut par exemple être rendu solidaire du rotor en le surmoulant dans une partie de corps en matière plastique 35 fixé rigidement (par exemple chassé, collé, ou soudé) à une extrémité du corps central 3.

Ainsi, par un usinage adéquat de cet axe 65, sous forme de deux surfaces coniques symétriques relativement à un plan perpendiculaire à l'axe de rotation A, on peut réduire le diamètre D du roulement à une valeur minimum. On diminue ainsi le couple de résistance généré par les forces de frottement des billes 62 sur les chemins de roulement 60 et 61, d'une part en réduisant la distance entre le point d'application de la force et l'axe de rotation, mais également en diminuant la vitesse linéaire de déplacement des billes sur les chemins de roulement. Ceci permet de maintenir un couple moteur pour l'entraînement de l'organe à déplacement linéaire élevé, même à très basse température où le lubrifiant présent dans le palier devient très visqueux.

La réduction de la vitesse de déplacement des billes entraîne aussi une réduction d'usure de celles-ci ainsi que des chemins de roulement, améliorant de ce fait la fiabilité du dispositif.

D'autre part, les caractéristiques précitées de l'invention permettent de réduire l'encombrement et le nombre de composants constitutifs.

Le boîtier 5 peut avantageusement être séparé en deux parties 52 et 53, avec une interface 54 approximativement dans le même plan séparant deux bobines 23 et 24 du stator. Les bobines peuvent donc être pré-montées plus facilement dans une des parties du boîtier avec le palier et le rotor pour faciliter les opérations ultérieures d'assemblage du dispositif complet.

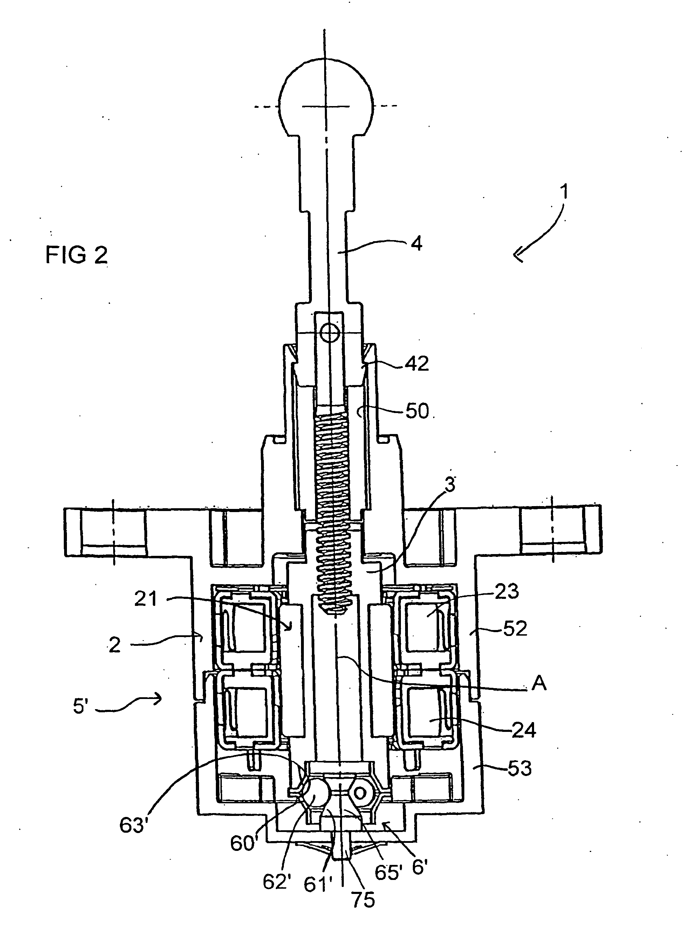

La figure 2 montre une deuxième forme d'exécution du palier 6' dans laquelle le roulement à billes comprend un chemin de roulement radialement extérieur 60' solidaire au rotor, et un chemin de roulement radialement intérieur 61' formé par un axe plein 65', coaxial au corps central et dans son prolongement.

Le chemin de roulement radialement extérieur 60' peut avantageusement être formé par une paire de tôles étampées 63' ayant une portion annulaire 64', et peut par exemple être rendu solidaire au rotor en le fixant rigidement (par exemple chassé, collé, ou soudé) à un extrémité du corps central 3.

L'axe plein 65' est de préférence réalisé à partir d'une barre de métal usiné, par exemple par tournage ou forgeage. L'axe plein 65' peut par exemple être chassé, collé, ou soudé au boîtier pour être fixé rigidement à ce dernier. Dans la variante illustrée en figure 2, l'axe plein 65' est fixé rigidement au boîtier par l'intermédiaire d'une saillie 75 solidaire et s'étendant de l'axe plein, et riveté ou fixé au boîtier.

Un tel actionneur peut donc avantageusement être utilisé pour commander un mouvement linéaire, selon l'une ou l'autre des directions axiales, pour de nombreuses applications, notamment pour la commande de mouvement, vertical ou horizontal d'un équipement de phare d'un véhicule, les mauvais fonctionnements des dispositifs connus, notamment en cas de basse température extérieure, étant éliminés.

## Revendications

1. Actionneur (1) pour le déplacement linéaire d'un organe à commander, comportant un boîtier, un moteur (2) avec un stator (20) et un rotor (21), et un système vis-écrou comportant un organe de déplacement linéaire (4), le rotor du moteur étant supporté à une extrémité par un palier (6, 6') sous forme de roulement à billes supportant des charges radiales et axiales et supporté à l'extrémité opposée au roulement par la partie filetée (40) de l'organe de déplacement linéaire, le roulement à billes ayant un chemin de roulement fixé au boîtier, et un chemin de roulement solidaire au rotor, un des chemins de roulement étant un chemin de roulement radialement intérieur (61, 61') sous forme d'un axe plein (65, 65') coaxial avec le rotor et s'étendant dans l'axe (A) du rotor entre le rotor et le boîtier.

2. Actionneur linéaire selon la revendication 1, **caractérisé en ce que** le chemin de roulement fixé au boîtier est un chemin de roulement radialement extérieur (60), et le chemin de roulement radialement intérieur sous forme d'un axe plein est solidaire du rotor (61).

3. Actionneur linéaire selon la revendication 2, **caractérisé en ce que** le chemin de roulement solidaire au rotor (61) est surmoulé par une partie de corps du rotor.

4. Actionneur linéaire selon la revendication 1, **caractérisé en ce que** le chemin de roulement solidaire au rotor est un chemin de roulement radialement extérieur (60'), et le chemin de roulement radialement intérieur sous forme d'un axe plein est fixé au boîtier.

5. Actionneur linéaire selon l'une des revendications 2 à 4, **caractérisé en ce que** le chemin de roulement radialement intérieur est usiné selon deux surfaces coniques symétriques relativement à un plan perpendiculaire à l'axe de rotation (A) dudit rotor (21).

6. Actionneur linéaire selon l'une des revendications précédentes, **caractérisé en ce que** l'organe à déplacement linéaire (4) comprend au moins une protubérance (42) coopérant avec un moyen de guidage (50) aménagée dans une partie du boîtier (5) pour empêcher la rotation dudit organe de déplacement linéaire.

7. Actionneur linéaire selon lune des revendications précédentes, **caractérisé en ce que** le moteur électrique (2) est un moteur pas à pas.

8. Actionneur linéaire selon l'une des revendications précédentes, **caractérisé en ce que** le boîtier (5) est séparé en deux parties (52, 53) selon un plan proche d'un plan séparant deux bobines (23, 24) du stator (20) du moteur électrique.

9. Actionneur linéaire selon l'une des revendications précédentes, **caractérisé en ce que** le chemin de roulement radialement extérieur (60, 60') est formé par une paire de tôles étampées identiques (63, 63').

10. Actionneur linéaire selon la revendication précédente, **caractérisé en ce que** les tôles étampées comprennent une portion annulaire (64) perpendiculaire à l'axe de rotation A, prise en sandwich entre des épaules de deux parties (55, 56) de boîtier assemblées.

11. Utilisation d'un actionneur linéaire selon l'une des revendications précédentes pour régler l'orientation d'un phare d'un véhicule automobile.

## Claims

1. An actuator (1) for the linear displacement of a member to be controlled, including a housing, a motor (2) with a stator (20) and a rotor (21), and a screw-nut system including a linear displacement member (4), the rotor of the motor being supported at one end by a bearing (6, 6') in the form of a ball bearing supporting radial and axial loads and supported at the end opposite to the bearing by the threaded portion (40) of the linear displacement member, the ball bearing having a raceway attached to the housing, and a raceway integral with the rotor, one of the raceways being a radially inner raceway (61, 61') in the form of a solid shaft (65, 65') coaxial with the rotor and extending along the axis (A) of the rotor between the rotor and the housing.

2. The linear actuator according to claim 1, **characterized in that** the raceway attached to the housing is a radially outer raceway (60), and the radially inner raceway in the form of a solid shaft is integral with the rotor (61).

3. The linear actuator according to claim 2, **characterized in that** the raceway integral with the rotor (61) is overmoulded by a body portion of the rotor.

4. The linear actuator according to claim 1, **characterized in that** the raceway integral with the rotor is a radially outer raceway (60') and the radially inner raceway in the form of a solid shaft is attached to the housing.

5. The linear actuator according to any of claims 2 to 4, **characterized in that** the radially inner raceway is machined along two conical surfaces symmetrical relatively to a plane perpendicular to the axis of rotation (A) of said rotor (21).

6. The linear actuator according to any of the preceding claims, **characterized in that** the linear displacement member (4) comprises at least one protrusion (42) cooperating with a guide means (50) provided in a portion of the housing (5) in order to prevent rotation of said linear displacement member.

7. The linear actuator according to any of the preceding claims, **characterized in that** the electric motor (2) is a stepping motor.

8. The linear actuator according to any of the preceding claims, **characterized in that** the housing (5) is separated into two portions (52, 53) along a plane close to a plane separating two coils (23, 24) of the stator (20) of the electric motor.

9. The linear actuator according to any of the preceding claims, **characterized in that** the radially outer raceway (60, 60') is formed by a pair of identical stamped metal sheets (63, 63').

10. The linear actuator according to the preceding claim, **characterized in that** the stamped metal sheets comprise a ring-shaped portion (64) perpendicular to the axis of rotation A, sandwiched between shoulders of two assembled housing portions (55, 56).

11. The use of a linear actuator according to any of the preceding claims, for adjusting the orientation of a headlamp of a motor vehicle.

## Patentansprüche

1. Antrieb (1) für die lineare Verschiebung eines zu stellenden Organs mit einem Gehäuse, einem Motor (2) mit Stator (20) und Rotor (21) und einem System aus Schraube und Mutter mit einem linear bewegten Organ (4), wobei der Rotor des Motors an einem Ende durch ein Lager (6, 6') in Gestalt eines Kugellagers, das radialen und axialen Belastungen widersteht, und an dem dem Kugellager entgegengesetzten Ende durch den Gewindeabschnitt (40) des linear bewegten Organs gehalten wird, während das Kugellager einen am Gehäuse befestigten Laufring und einen fest mit dem Rotor verbundenen Laufring besitzt und einer der Laufringe ein radial weiter innen gelegener Laufring (61, 61') in Gestalt einer vollen Achse (65, 65') ist, die koaxial zum Rotor und zwischen dem Rotor und dem Gehäuse in der Achse (A) des Rotors verläuft.

2. Linearantrieb nach Anspruch 1, **dadurch gekennzeichnet, dass** der am Gehäuse befestigte Laufring ein radial weiter aussen gelegener Laufring (60) ist, während der radial weiter innen gelegene Laufring in Gestalt einer vollen Achse fest mit dem Rotor (61) verbunden ist.

3. Linearantrieb nach Anspruch 2, **dadurch gekennzeichnet, dass** der fest mit dem Rotor (61) verbundene Laufring mit einem Abschnitt des Rotorkörpers überspritzt ist.

4. Linearantrieb nach Anspruch 1, **dadurch gekennzeichnet, dass** der fest mit dem Rotor verbundene Laufring ein radial weiter aussen gelegener Laufring (60') ist, während der radial weiter innen gelegene Laufring in Gestalt einer vollen Achse am Gehäuse befestigt ist.

5. Linearantrieb nach einem der Ansprüche 2 bis 4, **dadurch gekennzeichnet, dass** der radial weiter innen gelegene Laufring maschinell in Gestalt von zwei Kegelflächen hergestellt ist, die bezüglich einer zur Drehachse (A) des Rotors (21) senkrechten Ebene symmetrisch sind.

6. Linearantrieb nach einem der vorangehenden Ansprüche, **dadurch gekennzeichnet, dass** das linear bewegte Organ (4) zumindest einen Vorsprung (42) umfasst, der mit einem Führungsorgan (50) zusammenwirkt, das in einen Abschnitt des Gehäuses (5) eingelassen ist, um eine Drehung des linear bewegten Organs zu verhindern.

7. Linearantrieb nach einem der vorangehenden Ansprüche, **dadurch gekennzeichnet, dass** der Elektromotor (2) ein Schrittmotor ist.

8. Linearantrieb nach einem der vorangehenden Ansprüche, **dadurch gekennzeichnet, dass** das Gehäuse (5) entlang einer Ebene, die nahe einer Ebene verläuft, die zwei Spulen (23, 24) des Stators (20) des Elektromotors trennt, in zwei Abschnitte (52, 53) zerfällt.

9. Linearantrieb nach einem der vorangehenden Ansprüche, **dadurch gekennzeichnet, dass** der radial weiter aussen gelegene Laufring (60, 60') durch ein Paar identischer Stanzbleche (63, 63') gebildet wird.

10. Linearantrieb nach dem vorangehenden Anspruch, **dadurch gekennzeichnet, dass** die Stanzbleche einen zur Drehachse A senkrechten, ringförmigen Abschnitt (64) umfassen, der zwischen die Schultern zweier zusammengefügter Gehäuseabschnitte (55, 56) gelegt ist.

11. Verwendung des Linearantriebs nach einem der vorangehenden Ansprüche zur Einstellung der Richtung eines Scheinwerfers eines Kraftfahrzeugs.
